Europäisches Patentamt

European Patent Office

Office européen des brevets

(19)

(11) Numéro de publication: **0 246 159**
**B1**

(12) **FASCICULE DE BREVET EUROPEEN**

(45) Date de publication du fascicule du brevet: **08.08.90**

(21) Numéro de dépôt: **87401089.5**

(22) Date de dépôt: **14.05.87**

(51) Int. Cl.⁵: **B 01 J 35/10,** B 01 J 23/88, C 10 G 45/16, C 10 G 65/12

(54) **Procédé d'hydrotraitement catalytique d'hydrocarbures.**

(30) Priorité: **14.05.86 FR 8606917**

(43) Date de publication de la demande:
**19.11.87 Bulletin 87/47**

(45) Mention de la délivrance du brevet:
**08.08.90 Bulletin 90/32**

(84) Etats contractants désignés:
**BE DE FR GB IT NL**

(56) Documents cités:
**EP-A-0 048 670**
**EP-A-0 122 180**
**EP-A-0 157 674**
**FR-A-2 187 883**
**FR-A-2 356 931**
**US-A-4 278 566**
**US-A-4 297 242**

(73) Titulaire: **COMPAGNIE DE RAFFINAGE ET DE DISTRIBUTION TOTAL FRANCE**
**84, rue de Villiers**
**F-92300 Levallois Perret (FR)**

(72) Inventeur: **Devanneaux, Jacques**
**5, rue du Dauphiné**
**F-79290 Montivilliers (FR)**
Inventeur: **Gallez, Jean-Paul**
**Sente aux Prêtres- Parc d'Anxtot**
**F-76210 Bolbec (FR)**
Inventeur: **Mariette, Laurent**
**Route de Saint-Etienne**
**La Thillaye 14800 Saint-Arnoult (FR)**

(74) Mandataire: **Jolly, Jean-Pierre et al**
**Cabinet BROT et JOLLY 83, rue d'Amsterdam**
**F-75008 Paris (FR)**

Courier Press, Leamington Spa, England.

**Description**

La présente invention concerne un procédé d'hydrotraitement catalytique d'une charge d'hydrocarbures. Elle concerne plus particulièrement un procédé d'hydrodémétallisation et de conversion simultanée d'une charge d'hydrocarbures.

Les charges lourdes d'hydrocarbures, telles que les pétroles bruts, les résidus de distillation desdits pétroles bruts ou les charges provenant du charbon, par exemple, contiennent des composés organométalliques, notamment de nickel et de vanadium. Ces métaux sont des poisons des catalyseurs utilisés dans les procédés de traitement catalytique de ces charges, tels que les procédés d'hydrodésulfuration ou de craquage catalytique.

Préalablement à ces traitements catalytiques, il convient donc de faire subir à ces charges un hydrotraitement, en vue, notamment, de les démétalliser aussi complètement que possible.

Pour réaliser cette démétallisation, on a proposé d'utiliser de la bauxite (voir brevet U.S.—A—2 687 985), de l'alumine (voir brevets U.S.—A—3 901 792, FR.—A—2 357 635 et FR.—A—2 542 754, ce dernier au nom de la Demanderesse).

On a également proposé d'utiliser de l'alumine, sur laquelle est déposé au moins un métal des Groupes VI et VIII de la classification périodique des éléments (voir, par exemple, la demande de brevet français n° 84 14 109, en date du 14 Septembre 1984, également au nom de la Demanderesse).

Ces catalyseurs ont essentiellement une fonction démétallisante. Il peut être cependant intéressant, dans un échaînement démétallisation (1ère étape)—désulfuration (2ème étape), d'utiliser, dans la première étape, un catalyseur qui, outre une fonction démétallisante, possède une fonction de conversion. Les molécules lourdes sont ainsi transformées en molécules plus légères et, lors de la deuxième étape, la désulfuration de la charge est facilitée.

La Demanderesse a précisément conçu un catalyseur qui possède, outre un pouvoir démétallisant et hydrogénant élevé, un pouvoir convertissant important.

Le but de la présente invention est donc de proposer un procédé d'hydrotraitement de charge d'hydrocarbures qui implique une hydrodémétallisation et une conversion simultanée de la charge.

L'invention a par conséquent pour objet un procédé d'hydrodémétallisation et de conversion simultanée d'une charge d'hydrocarbures, ce procédé consistant à faire réagir ladite charge avec de l'hydrogène en présence d'un catalyseur comprenant:

— un support d'alumine pouvant contenir au plus 10% de silice;
— de 0,5 à 20% et, de préférence, 5 à 10% en poids de molybdène, à l'état métallique ou combiné,
— de 0,5 à 10% et, de préférence, de 2,5 à 8% en poids de nickel, à l'état métallique ou combiné, à une température comprise entre 300 et 450°C, sous une pression comprise entre 25 et 250 bar, avec un rapport volumique hydrogène/hydrocarbures comprise entre 50 et 3000 normaux-litres et avec une vitesse volumique horaire de la charge, mesurée à l'état liquide, comprise entre 0,1 et 5 v/v/h (volume de liquide passant en une heure sur une unité de volume de catalyseur), ce procédé étant caractérisé en ce que le catalyseur possède les propriétés physiques suivantes:

— une surface spécifique comprise entre 100 et 350 m²/g et, de préférence, comprise entre 140 et 300 m²/g,
— un volume poreux compris entre 0,5 et 2 cm³/g et, de préférence, compris entre 0,6 et 1,2 cm³/g,
— un mode de distribution des rayons de pore (c'est-à-dire le maximum de la courbe de distribution des rayons de pores) compris entre 30 et $70 \cdot 10^{-8}$ cm,
— une distribution du volume poreux telle que le catalyseur possède:
* au moins 60% de son volume poreux constitué par des pores de rayons compris entre 0 et $100 \cdot 10^{-8}$ cm,
* au plus 30% de son volume poreux constitué par des pores de rayons compris entre 100 et $600 \cdot 10^{-8}$ cm,
* au plus 10% de son volume poreux constitué par des pores de rayons supérieurs à $600 \cdot 10^{-8}$ cm;
et en ce que le spectre obtenu en étudiant ledit catalyseur par microsonde RAMAN est constitué par des raies ayant, pour les fréquences comprises entre 900 et 1020 cm⁻¹, la distribution suivante:
* 40% au plus ont une fréquence comprise entre 900 et 930 cm⁻¹,
* 30% au moins ont une fréquence comprise entre 930 et 955 cm⁻¹,
* 40% au plus ont une fréquence comprise entre 955 et 1020 cm⁻¹.

Il est précisé que, dans cet objet de l'invention et dans la suite de la présente description, le mot fréquence est employé à la place de nombre d'onde. C'est en effet l'usage chez les spécialistes en spectroscopie RAMAN (voir par exemple l'article de J. M. STENCEL et al., paru dans The Journal of Catalysts -V.90—Pages 314—322—1984).

En fait, la fréquence $\bar{v}$ est liée au nombre d'onde $\bar{v}$ par la relation $\bar{v} = c\bar{v}$, c étant la vitesse de la lumière.

Il est précisé également que la surface spécifique est mesurée par adsorption d'azote (méthode BET). Les volumes poreux sont mesurés par la méthode BET pour les pores de rayons inférieurs à $100 \cdot 10^{-8}$ cm et au porosimètre à mercure pour les pores de rayons supérieurs à $100 \cdot 10^{-8}$ cm.

Le support d'alumine peut être préparé en mélangeant par malaxage de l'eau et de la poudre d'alumine précipitée et séchée par atomisation. Le mélange est ensuite extrudé dans une extrudeuse. Les

2

extrudés obtenus sont séchés à 120°C environ, puis calcinés à une température comprise entre 500 et 750°C.

Le catalyseur utilisé contient de 0,5 à 20% et, de préférence, de 5 à 10% en poids de molybdène et 0,5 à 10% et, de préférence, de 2,5 à 8% en poids de nickel.

Ce catalyseur peut être préparé par une impregnation du support par au moins une solution contenant au moins un élément choisi dans le groupe constitué par le molybdène et le nickel, ladite imprégnation étant suivie d'une calcination à une température comprise entre 300 et 700°C, et, de préférence, entre 450 et 600°C.

Le catalyseur possède les caractéristiques suivantes:

— une surface spécifique comprise entre 100 et 350 m$^2$/g et, de préférence, comprise entre 140 et 300 m$^2$/g,

— un volume poreux compris entre 0,5 et 2 cm$^3$/g et, de préférence, compris entre 0,6 et 1,2 cm$^3$/g,

— un mode de distribution des rayons de pore (c'est-à-dire maximum de la courbe de distribution des rayons de pores) compris entre 30 et 70 · 10$^{-8}$ cm;

— une distribution du volume poreux telle que le catalyseur possède:

* au moins 60% de son volume poreux constitué par des pores de rayons compris entre 0 et 100 · 10$^{-8}$ cm,

* au plus 30% de son volume poreux constitué par des pores de rayons compris entre 100 et 600 · 10$^{-8}$ cm,

* au plus 10% de son volume poreux constitué par des pores de rayons supérieurs à 600 · 10$^{-8}$ cm.

Plus particulièrement, ce catalyseur est caractérisé en ce que le spectre obtenu en étudiant ledit catalyseur par microsonde RAMAN est constitué par des raies ayant, pour les fréquences comprises entre 900 et 1020 cm$^{-1}$, la distribution suivante:

* 40% au plus ont une fréquence comprise entre 900 et 930 cm$^{-1}$,

* 30% au moins ont une fréquence comprise entre 930 et 955 cm$^{-1}$,

* 40% au plus ont une fréquence comprise entre 955 et 1020 cm$^{-1}$.

Cette définition du spectre RAMAN du catalyseur décrit en fait un pic fin dans la zone de fréquence comprise entre 900 et 1020 cm$^{-1}$ et qui correspond aux atomes de molybdène.

On peut se reporter, pour avoir une description de la technique de microsonde RAMAN, au brevet français N° 2.356.931.

La Demanderesse a montré qu'un catalyseur présentant les caractéristiques de volume poreux et de spectre RAMAN indiquées est un catalyseur présentant un pouvoir démétallisant et hydrogénant élevé ainsi qu'un pouvoir convertissant important, pouvant être utilisé pour l'hydrotraitement de charges d'hydrocarbures provenant de la distillation du pétrole brut, en vue de démétalliser et de convertir simultanément ces charges.

L'opération d'hydrotraitement s'effectue dans les conditions suivantes:

— température comprise entre 300 et 450°C,

— pression comprise entre 25 et 250 bar,

— rapport volumique hydrogène/hydrocarbures compris entre 50 et 3000 normaux-litres/litre,

— vitesse volumique horaire de la charge, mesurée à l'état liquide, de préférence comprise entre 0,1 et 5 (la vitesse volumique horaire étant le volume de liquide passant par heure sur une unité de volume de catalyseur).

Préalablement aux opérations d'hydrotraitement des charges d'hydrocarbures, il peut être avantageux de présulfurer le catalyseur en présence d'hydrogène, par des procédés connus; en général, ou monte la température jusqu'à environ 350 à 400°C, en faisant passer sur le catalyseur des composés susceptibles de libérer du soufre, tels que des mélanges d'hydrogène et de sulfure d'hydrogène, des mercaptans ou du sulfure de carbone, ou même un gazole contenant du soufre.

Les exemples qui suivent sont destinés à illustrer l'invention. Ils n'ont pas de caractère limitatif.

L'invention est illustrée également par trois figures jointes, qui seront explicitées lors de la description des exemples.

Exemple 1

Cet exemple concerne la préparation d'un catalyseur A utilisable dans le procédé selon l'invention.

On part d'une alumine commercialisée par la Société American Cyanamid sous la référence 5829.

On imprègne cette alumine avec une solution aqueuse d'heptamolybdate d'ammonium et de nitrate de nickel, cette solution étant en concentration telle que le catalyseur final contienne 12% en poids d'oxyde de molybdène MoO$_3$ et 3,4% d'oxyde de nickel NiO.

On sèche le produit obtenu 16 heures à 120°C et on le calcine à l'air pendant 2 heures à 500°C.

3

# EP 0 246 159 B1

On obtient ainsi le catalyseur A selon l'invention, ayant la composition et les caractéristiques suivantes:

- Al$_2$O$_3$ (% en poids): 81,6
- MoO$_3$ (% en poids): 12
- NiO (% en poids): 3,4
- SiO$_2$ (% en poids): 3
- Surface spécifique en m²/g (mesurée à l'azote: BET): 160
- Volume poreux total en cm³/g: 0,66
- Mode de distribution en $10^{-8}$ cm: 30—70
- Distribution des rayons de pore:
  - 0—15 · $10^{-8}$ cm: 0,08 cm³/g, soit 12%
  - 15—25 · $10^{-8}$ cm: 0,03 cm³/g, soit 5%
  - 25—50 · $10^{-8}$ cm: 0,08 cm³/g, soit 12%
  - 50—75 · $10^{-8}$ cm: 0,12 cm³/g, soit 18%
  - 75—100 · $10^{-8}$ cm: 0,13 cm³/g, soit 20%
  - 0—100 · $10^{-8}$ cm: 0,44 cm³/g, soit 67%
  - 100—600 · $10^{-8}$ cm: 0,17 cm³/g, soit 26%
  - >600 · $10^{-8}$ cm: 0,05 cm³/g, soit 7%.

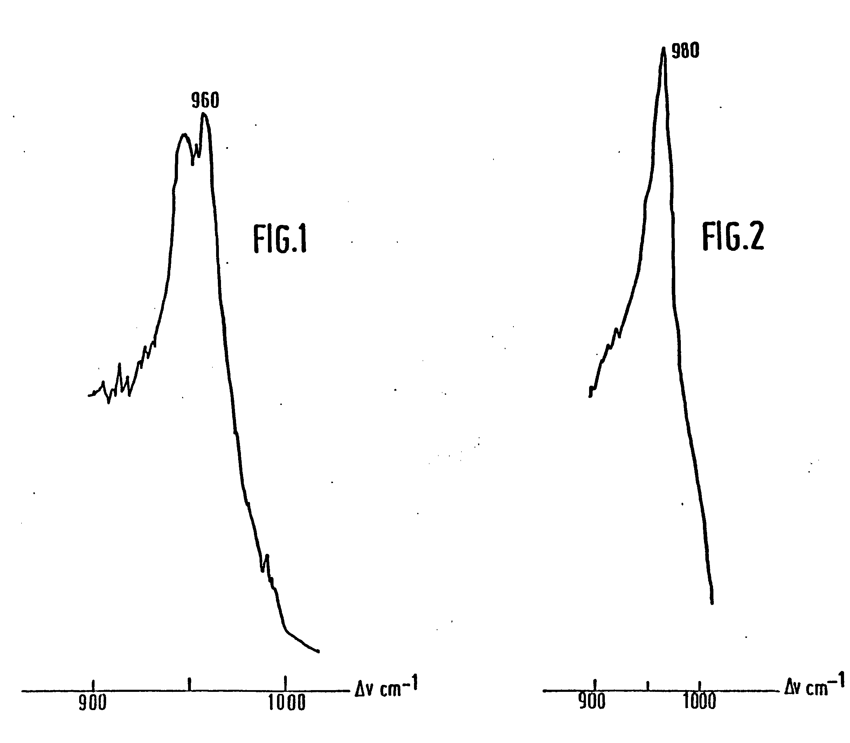

Ce catalyseur a été étudié à l'aide d'une microsonde RAMAN. Le spectre de ce catalyseur, limité à la zone de fréquence 900—1020 cm$^{-1}$ est représenté sur la figure 1.

De ce spectre, on peut calculer la répartition des fréquences des raies qui est donnée dans le Tableau 1 ci-après.

TABLEAU 1

| % des fréquences | | |
| --- | --- | --- |
| 900—930 cm$^{-1}$ | 930—955 cm$^{-1}$ | 955—1020 cm$^{-1}$ |
| 28,5 | 37,5 | 34 |

Exemple 2

Cet exemple concerne l'hydrotraitement d'une charge 1 d'hydrocarbures à l'aide du catalyseur A de l'Exemple 1 et d'un catalyseur témoin T1 présenté comme un catalyseur de démétallisation et de conversion.

La charge est constituée par le résidu de la distillation sous pression réduite d'un pétrole brut d'origine KIRKOUK et a les caractéristiques suivantes:

- Masse volumique à 15°C (mesurée selon la norme AFNOR T 60—101): 1016 kg/m³
- Viscosité à 100°C (mesurée selon la norme AFNOR T 60—100): 0,1370 $10^{-2}$ m²/s
- Teneur en soufre (mesurée par fluorescence X): 5,58% en poids
- Teneur en nickel (mesurée par fluorescence X): 55 p.p.m.
- Teneur en vanadium (mesurée par fluorescence X): 129 p.p.m.
- Teneur en asphaltènes (mesurée selon la norme AFNOR T 60—115): 6,5% en poids
- Teneur en carbone Conradson (mesurée selon la norme AFNOR T 60—116): 20% en poids
- Teneur en azote (mesurée par chimiluminescence): 0,43% en poids
- Rapport atomique hydrogène/carbone (mesuré par dosage infrarouge): 1,50% en poids.

Le catalyseur commercial témoin T1 est composé d'une alumine sur laquelle ont été déposés du nickel et du molybdène.

4

Le spectre de ce catalyseur obtenu par microsonde RAMAN est donnée en figure 2.
La répartition des raies est donnée dans le Tableau II ci-après.

TABLEAU II

| % en fréquences | | |
|---|---|---|
| 900—930 cm$^{-1}$ | 930—955 cm$^{-1}$ | 955—1020 cm$^{-1}$ |
| 18 | 26 | 56 |

Les essais sont effectués de la façon suivante:

On utilise une unité pilote à recycle de gaz, avec un réacteur isotherme contenant 150 cm$^3$ de catalyseur.

Avant le test proprement dit, on présulfure le catalyseur avec un gazole, dont l'intervalle de distillation est compris entre 225 et 385°C et qui contient 1,3% en poids de soufre.

Cette présulfuration est effectuée sous une pression d'hydrogène de 30 bar, à une vitesse spatiale horaire de 3 et un taux d'hydrogène/charge de 200 normaux-litres/litre. On augmente progressivement la température en 24 heures, de façon à atteindre les températures auxquelles les essais sont effectués.

Les conditions opératoires des essais sont données dans le Tableau III ci-après.

TABLEAU III

| Essai | T11 | A11 | T12 | A12 |
|---|---|---|---|---|
| Catalyseur | T1 | A | T1 | A |
| Pression d'hydrogène en bar | 140 | 140 | 140 | 140 |
| Pression totale en bar | 160 | 160 | 160 | 160 |
| Rapport hydrogène/ hydrocarbures en normaux- litres/litre | 1000 | 1000 | 1000 | 1000 |
| Vitesse spatiale horaire | 0,5 | 0,5 | 0,5 | 0,5 |
| Température en °C | 390 | 390 | 410 | 410 |

On recueille les effluents liquides dont on mesure les caractéristiques. L'effluent liquide est constitué par les hydrocarbures à 5 et plus de 5 atomes de carbone.

EP 0 246 159 B1

L'effluent total contient, outre l'effluent liquide, les gaz suivants: hydrocarbures de 1 à 4 atomes de carbone, hydrogène sulfuré, ammoniac.

Les résultats des essais figurent dans le Tableau IV ci-après:

TABLEAU IV

| Caractéristiques | Charge | Effluents des essais | | | |
|---|---|---|---|---|---|
| | | T11 | A11 | T12 | A12 |
| Teneur en azote en % | 0,43 | 0,37 | 0,29 | 0,32 | 0,24 |
| Rapport atomique H/C | 1,50 | 1,59 | 1,64 | 1,60 | 1,65 |
| Teneur en carbone Conradson en % | 20 | 9,1 | 7,3 | 7,4 | 5,4 |
| Teneur en asphaltènes en % | 6,5 | 0,3 | 0,4 | 0,5 | 0,4 |
| Teneur en métaux en p.p.m. | 184 | 15 | 9,2 | 5,5 | 3,7 |
| Teneur en soufre en % | 5,58 | 1,67 | 1,12 | 1,39 | 0,84 |
| Conversion 540$^+$(1) | | 26,5 | 31 | 46 | 52 |

(1) La conversion 540$^+$ est définie de la façon suivante:

Conversion $540^+ = \dfrac{A-B}{A}$, où A est le poids de la fraction de la charge dont le point d'ébullition est supérieur à 540°C et B le poids de la fraction de l'effluent total dont le point d'ébullition est supérieur à 540°C.

Le tableau permet de constater que le catalyseur selon l'invention a:
— un pouvoir démétallisant plus élevé que le catalyseur témoin,
— un pouvoir hydrogénant également plus élevé (teneurs en soufre, azote, carbone Conradson plus faibles, rapport H/C plus élevé),
— un pouvoir convertissant plus élevé.

Exemple 3

Cet exemple concerne l'hydrotraitement d'une charge 2 d'hydrocarbures à l'aide du catalyseur A de l'Exemple 1 et du catalyseur T1 de l'exemple 2.

La charge est constitué par le résidu de la distillation sous pression atmosphérique d'un pétrole brut d'origine BOSCAN et a les caractéristiques suivantes:

— Masse volumique à 15°C
(mesurée selon la norme AFNOR T 60—101): 1044 kg/m³
— Viscosité à 100°C
(mesurée selon la norme AFNOR T-60—100): 0,5 10⁻² m²/s
— Teneur en soufre
(mesurée par fluorescence X): 5,68% en poids
— Teneur en nickel
(mesurée par fluorescence X): 120 p.p.m.
— Teneur en vanadium
(mesurée par fluorescence X): 1375 p.p.m.
— Teneur en asphaltènes
(mesurée selon la norme AFNOR T 60—115): 15% en poids
— Teneur en carbone Conradson
(mesurée selon la norme AFNOR T 60—116): 20,8% en poids
— Teneur en azote
(mesurée par chimiluminescence): 0,81% en poids
— Rapport atomique hydrogène/carbone
(mesuré par dosage infrarouge): 1,47% en poids.

6

Les essais sont effectués de la façon suivante:

On utilise une unité pilote à recycle de gaz avec un réacteur isotherme contenant 150 cm³ de catalyseur.

Avant le test proprement dit, on présulfure le catalyseur avec un gazole dont l'intervalle de distillation est compris entre 225 et 385°C et qui contient 1,3% en poids de soufre.

Cette présulfuration est effectuée sous une pression d'hydrogène de 30 bar, à une vitesse spatiale horaire de 3 et un taux hydrogène/charge de 200 normaux-litres/litre. On augmente progressivement la température de façon à atteindre un taux d'hydrodémétallisation de 80%, c'est-à-dire que l'effluent ne contient plus que 20% de métaux par rapport aux métaux contenus dans la charge.

Les essais sont effectués à une pression de 140 bar, à une vitesse spatiale horaire de 0,5 et avec un rapport volumique hydrogène/hydrocarbures de 1000 normaux-litres/litre.

On atteint un taux d'hydrodémétallisation de 80% à 360°C. On maintient ce taux en élevant progressivement la température.

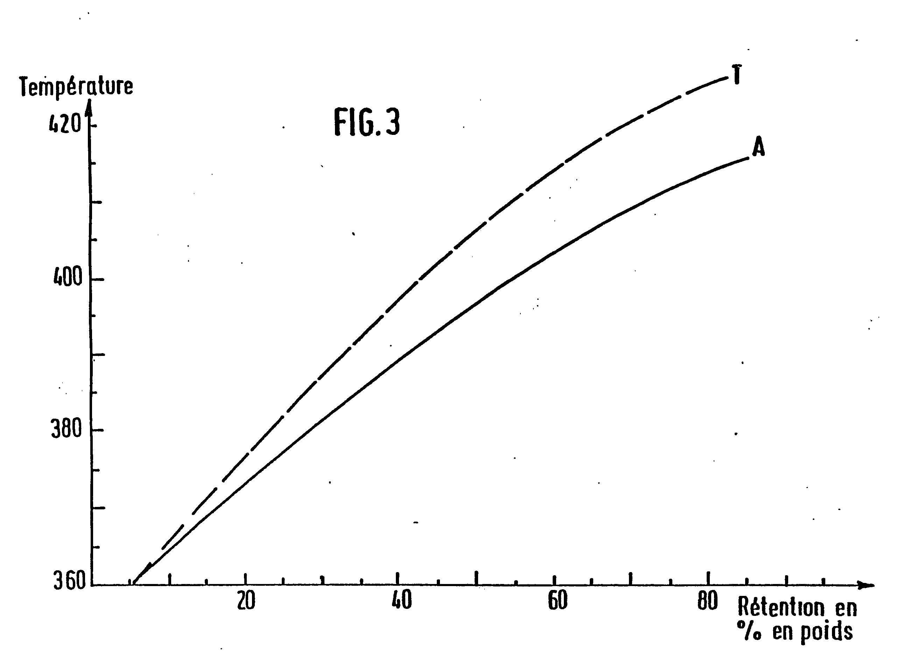

On a illustré, sur la figure 3, la variation de la rétention en fonction de la température. La rétention est le cumul du poids des métaux (nickel+vanadium) enlevés à la charge.

Elle est exprimée en grammes de métaux enlevés pour cent grammes de catalyseur chargés dans le réacteur.

On constate que le catalyseur selon l'invention retient le même pourcentage de métaux que le catalyseur témoin à une température plus faible, ce qui prouve sa meilleure résistance à la désactivation.

Exemple 4

Cet exemple concerne l'hydrotraitement d'une charge 3 d'hydrocarbures à l'aide du catalyseur A de l'Exemple 1 et d'un catalyseur témoin T2.

Ce catalyseur T2, mis au point par la Demanderesse et qui fait l'objet de la demande de brevet français n° 84 14 109, est un bon catalyseur d'hydrodémétallisation.

La charge est constituée par le résidu de la distillation sous pression réduite d'un pétrole brut d'origine KOWEIT et a les caractéristiques suivantes:

— Masse volumique à 15°C
(mesurée selon la norme AFNOR T 60—101): 1030 kg/m³
— Viscosité à 100°C
(mesurée selon la norme AFNOR T 60—100): 0,2160 $10^{-2}$ m²/s
— Teneur en soufre
(mesurée par fluorescence X): 5,33% en poids
— Teneur en nickel
(mesurée par fluorescence X): 31 p.p.m.
— Teneur en vanadium
(mesurée par fluorescence X): 119 p.p.m.
— Teneur en asphaltènes
(mesurée selon la norme AFNOR T-60—115): 7% en poids
— Teneur en carbone Conradson
(mesurée selon la norme AFNOR T 60—116): 20,7% en poids
— Teneur en azote
(mesurée par chimiluminescence): 0,44% en poids
— Rapport atomique hydrogène/carbone
(mesuré par dosage infrarouge): 1,47% en poids.

Le catalyseur témoin T2 a la composition et les caractéristiques suivantes:

— $Al_2O_3$ (% en poids): 99,6
— $MoO_3$ (% en poids): 0,3
— NiO (% en poids): 0,3
— Surface spécifique en m²/g
(mesurée à l'azote: BET): 218
— Volume poreux total en cm³/g: 0,74
— Mode de distribution en $10^{-8}$ cm: 30—70
— Distribution des rayons de pore
   0—15 · $10^{-8}$ cm: 0,110 cm³/g, soit: 15%
   15—25 · $10^{-8}$ cm: 0,045 cm³/g, soit: 6%
   25—50 · $10^{-8}$ cm: 0,108 cm³/g, soit: 15%
   50—75 · $10^{-8}$ cm: 0,139 cm³/g, soit: 19%
   75—100 · $10^{-8}$ cm: 0,165 cm³/g, soit: 22%
   0—100 · $10^{-8}$ cm: 0,567 cm³/g, soit: 77%
   100—600 · $10^{-8}$ cm: 0,090 cm³/g, soit: 12%
   >600 · $10^{-8}$ cm: 0,083 cm³/g, soit: 11%.

7

## EP 0 246 159 B1

Ce catalyseur, étudié à l'aide d'une microsonde RAMAN, ne présente pas de spectre dans la zone de fréquence 900—1020 cm$^{-1}$, du fait de faibles teneurs en phases actives.

Les essais sont effectués de la façon suivante:

On utilise une unité pilote à recycle de gaz, avec un réacteur isotherme contenant 150 cm$^3$ de catalyseur.

Avant le test proprement dit, on présulfure le catalyseur avec un gazole, dont l'intervalle de distillation est compris entre 225 et 385°C et qui contient 1,3% en poids de soufre.

Cette présulfuration est effectuée sous une pression d'hydrogène de 30 bar, à une vitesse spatiale horaire de 3 et un taux hydrogène/charge de 200 normaux-litres/litre. On augmente progressivement la température en 24 heures, de façon à atteindre les températures auxquelles sont effectués les essais.

Les conditions opératoires des essais sont donnés dans le Tableau V ci-après.

TABLEAU V

| Essai | T21 | A21 | T22 | A22 |
|---|---|---|---|---|
| Catalyseur | T2 | A | T2 | A |
| Pression d'hydrogène en bar | 140 | 140 | 140 | 140 |
| Pression totale en bar | 160 | 160 | 160 | 160 |
| Rapport hydrogène/ hydrocarbures en normaux-1/1. | 1500 | 1500 | 1500 | 1500 |
| Vitesse spatiale horaire | 0,4 | 0,4 | 0,4 | 0,4 |
| Température en °C | 390 | 390 | 410 | 410 |

On recueille les effluents liquides dont on mesure les caractéristiques. Les résultats des essais figurent dans le Tableau VI ci-après.

TABLEAU VI

| Caractéristiques | Charge | Effluents des essais | | | |
|---|---|---|---|---|---|
| | | T21 | A21 | T22 | A22 |
| Teneur en azote en % | 0,44 | 0,45 | 0,33 | 0,37 | 0,35 |
| Rapport atomique H/C | 1,47 | 1,52 | 1,56 | | 1,58 |
| Teneur en carbone Conradson en % | 20,7 | 15,2 | 12,1 | 12,3 | 7,6 |
| Teneur en asphaltènes en % | 7 | | | | 1,6 |
| Teneur en métaux en p.p.m. | 150 | 37,5 | 30 | 15 | 7,5 |
| Teneur en soufre en % | 5,33 | 3,73 | 1,33 | 2,66 | 0,80 |
| Conversion 540$^+$(1) | | 15 | 29 | 31 | 52 |

(1) Même signification que dans le Tableau IV.

8

Ce tableau permet de constater que le catalyseur du procédé selon l'invention a un pouvoir démétallisant, un pouvoir hydrogénant, et un pouvoir convertissant plus élevés que le catalyseur témoin.

Exemple 5

Cet exemple est destiné à illustre le procédé selon l'invention dans un echaînement démétallisation (1ère étape)—désulfuration (2ème étape).

On compare cette utilisation du catalyseur A de l'Exemple 1, suivi d'un catalyseur d'hydrodésulfuration, avec l'utilisation d'un catalyseur d'hydrodésulfuration seul (ci-après catalyseur HDS).

Pour les essais selon l'invention, on dispose de deux réacteurs:
— dans le premier réacteur, on met le catalyseur A décrit dans l'exemple 1;
— dans le second réacteur, on met un catalyseur HDS qui va être décrit plus loin.

Pour les essais témoin, on dispose d'un seul réacteur d'une capacité telle qu'il puisse contenir une quantité de catalyseur égale à la quantité globale des deux catalyseurs utilisés dans les essais selon l'invention.

On décrit ci-après le catalyseur HDS:

On part d'une alumine commercialisée par la Société American Cyanamid sous la référence 5960.

On imprègne cette alumine avec une solution aqueuse d'heptamolybdate d'ammonium et de nitrate de cobalt, cette solution étant en concentration telle que le catalyseur final contienne 16,3% en poids d'oxyde de molybdène $MoO_3$ et 4,7% d'oxyde de cobalt CoO. On sèche le produit obtenu 16 heures à 120°C et on le calcine à l'air 2 heures à 500°C.

On obtient ainsi le catalyseur HDS, ayant la composition et les caractéristiques suivantes:

| | |
|---|---|
| — $Al_2O_3$ (% en poids): | 75,5 |
| — $MoO_3$ (% en poids): | 16,3 |
| — CoO (% en poids): | 4,7 |
| — $SiO_2$ (% en poids): | 3,5 |
| — densité apparente: | 0,55 g/cm$^3$ |
| — surface spécifique en m$^2$/g (mesurée à l'azote: BET): | 274 |
| — Volume poreux total en cm$^3$/g: | 0,82 |
| — mode de distribution des rayons de pore en $10^{-8}$ cm: | 35 |
| — distribution des rayons de pore: | |
| * 0—15 · $10^{-8}$ cm: 0,15 cm$^3$/g, soit: 18,2% | |
| * 15—25 · $10^{-8}$ cm: 0,08 cm$^3$/g, soit: 9,8% | |
| * 25—50 · $10^{-8}$ cm: 0,20 cm$^3$/g, soit: 24,4% | |
| * 50—100 · $10^{-8}$ cm: 0,15 cm$^3$/g, soit: 18,2% | |
| * 0—100 · $10^{-8}$ cm: 0,58 cm$^3$/g, soit: 70,7% | |
| * 100—300 · $10^{-8}$ cm: 0,10 cm$^3$/g, soit: 12,2% | |
| * >300 · $10^{-8}$ cm: 0,14 cm$^3$/g, soit: 17,1% | |
| * 100—1000 · $10^{-8}$ cm: 0,16 cm$^3$/g, soit: 19,5% | |
| * >1000 · $10^{-8}$ cm: 0,08 cm$^3$/g, soit: 9,8%. | |

Ce catalyseur a été étudié à l'aide d'une microsonde RAMAN.

A partir du spectre de ce catalyseur, on peut calculer la répartition des fréquences des raies, qui est donnée dans le Tableau VII ci-après.

TABLEAU VII

| % des fréquences | | |
|---|---|---|
| 900—930 cm$^{-1}$ | 930—955 cm$^{-1}$ | 955—1020 cm$^{-1}$ |
| 31 | 46 | 23 |

On a effectué sur l'enchaînement A et HDS deux types d'essais:
— des essais sur un résidu de distillation à la pression atmosphérique d'un pétrole brut origine KOWEIT, ci-après RA KOWEIT;
— un essai sur un résidu de distillation sous pression réduite d'un résidu de distillation atmosphérique d'un pétrole brut d'origine KOWEIT, ci-après RSV KOWEIT.

Essais sur RSV KOWEIT

On a effectué des essais:
— avec la combinaison catalyseur A+catalyseur HDS,
— avec le catalyseur HDS seul.

Les essais sont effectués:
— à une pression totale de 160 bar (pression d'hydrogène: 140 bar),
— à une température de 380°C,
— avec un rapport hydrogène/charge de 1500 normaux m³/m³,
— avec une vitesse spatiale horaire de 0,3.

Les caractéristiques de la charge et des effluents après distillation atmosphériques sont donnés dans le tableau VIII ci-après:

TABLEAU VIII

| Caractéristiques | Charge | Effluent combinaison catalyseurs A+HDS | Effluent catalyseur HDS seul |
|---|---|---|---|
| Masse volumique à 15°C (mesurée selon la norme AFNOR T 60—101) en kg/m³ | 971 | 919 | 921 |
| Viscosité à 100°C (mesurée selon norme AFNOR T 60—100) en mm² s⁻¹ | 48,20 | 21,30 | 21,46 |
| Teneur en soufre (mesurée par fluorescence X) en % poids | 3,88 | 0,07 | 0,10 |
| Teneur en azote (mesurée par chimiluminescence) en % poids | 0,26 | 0,13 | 0,15 |
| Teneur en carbone Conradson (mesurée selon la norme AFNOR T 60—116) en % poids | 10,5 | 2,9 | 2,9 |
| Teneur en asphaltènes (mesurée selon la norme AFNOR T 60—115) en % poids | 3,1 | 0,3 | 0,4 |
| Teneur en vanadium (mesurée par fluorescence X) en p.p.m. | 57 | <1 | <1 |
| Teneur en nickel (mesurée par fluorescence X) en p.p.m. | 16 | <1 | <1 |
| Teneur en hydrogène (mesurée par microanalyse) en % poids | 11,3 | 12,3 | 12,5 |
| Fraction par rapport à la charge distillant au-dessus de 375°C | 90,7 | 77,5 | 77,5 |

Ces résultats ont été obtenus 400 heures après la mise en service des catalyseurs avec la charge et dans les conditions indiquées.

On constate, d'après ce tableau, que les produits obtenus avec la combinaison catalyseurs A+HDS sont aussi bons qu'avec le catalyseur HDS seul.

En outre, la durée du cycle se trouve allongée.

En effet, pour maintenir la réduction de la teneur en carbone Conradson au niveau constant de 72%, il faut augmenter progressivement la température des deux réacteurs pour compenser la désactivation des catalyseurs due au dépôt des sulfures de vanadium et de nickel. La limite de température autorisée dans les

## EP 0 246 159 B1

essais, 420°C, est atteinte après 8000 heures de fonctionnement avec le catalyseur HDS et 12800 heures avec l'enchaînement des catalyseurs A+HDS.

Essais sur RSV KOWEIT

On a effectué un essai avec la combinaison catalyseur A+catalyseur HDS, afin de montrer le pouvoir convertissant démétallisant et désulfurant de la combinaison. On sait que le catalyseur HDS se convertit peu aux conditions auxquelles il est soumis dans le présent essai.

L'essai a été effectué:
— à une pression totale de 160 bar (pression d'hydrogène: 140 bar);
— à une température de 400°C pour le catalyseur A et de 380°C pour le catalyseur HDS,
— avec un rapport hydrogène/charge de 1500 normaux m³/m³,
— avec une vitesse spatiale horaire de 0,2.
Les caractéristiques de la charge et de l'effluent figurent dans le tableau IX ci-après:

TABLEAU IX

|  |  | Charge | Effluent |
|---|---|---|---|
| Produits obtenus par distillation en % poids par rapport à la charge | Hydrogène sulfuré mesuré par chromatographie en phase gazeuse |  | 5,7 |
|  | Ammoniac calculé sur la base de la diminution en azote dans l'effluent |  | 0,3 |
|  | Hydrocarbures de 1 à 4 atomes de carbone |  | 4,1 |
|  | Hydrocarbures de 5 atomes de carbone et plus distillant jusqu'à 375°C |  | 22,8 |
|  | Fraction distillant de 375°C à 540°C | 5,9 | 35,3 |
|  | Fraction distillant au-dessus de 540°C | 94,1 | 33,7 |
| Gazole | Masse volumique à 15°C en kg/m³* |  | 926 |
|  | Viscosité à 70°C en mm²s⁻¹* |  | 28,05 |
|  | Viscosité à 100°C en mm²s⁻¹* |  | 10,64 |
|  | Azote basique en ppm mesuré par méthode électrochimique |  | 451 |
|  | Teneur en Carbone Conradson en % poids* |  | <0,02 |
|  | Teneur en hydrogène en % poids* |  | 12,5 |
| Résidu** | Masse volumique en 15°C en kg/m³* | 1030,5 | 967 |
|  | Viscosité à 100°C en mm²s⁻¹* | 1947 | 139 |
|  | Soufre en % poids* | 5,3 | 0,36 |
|  | Vanadium+Nickel en ppm* | 150 | 5 |

\* se reporter au tableau VIII pour les normes

\*\* par Résidu, on entend soit la charge proprement dite, soit le résidu de l'effluent.

Le tableau permet de constater que la combinaison A+HDS désulfure, démétallisé et convertit la charge.

**Revendication**

Procédé d'hydrodémétallisation et de conversion simultanée d'une charge d'hydrocarbures, ce procédé consistant à faire réagir ladite charge avec de l'hydrogène en présence d'un catalyseur comprenant:
— un support d'alumine pouvant contenir au plus 10% de silice;
— de 0,5 à 20% et, de préférence, 5 à 10% en poids de molybdène, à l'état métallique ou combiné,
— de 0,5 à 10% et, de préférence, de 2,5 à 8% en poids de nickel, à l'état métallique ou combiné,
à une température comprise entre 300 et 450°C, sous une pression comprise entre 25 et 250 bar, avec un rapport volumique hydrogène/hydrocarbures comprise entre 50 et 3000 normaux-litres et avec une vitesse volumique horaire de la charge, mesurée à l'état liquide, comprise entre 0,1 et 5 v/v/h (volume de liquide passant en une heure sur une unité de volume de catalyseur),
ce procédé étant caractérisé en ce que le catalyseur possède les propriétés physiques suivantes:
— une surface spécifique comprise entre 100 et 350 m$^2$/g et, de préférence, comprise entre 140 et 300 m$^2$/g,
— un volume poreux compris entre 0,5 et 2 cm$^3$/g et, de préférence, compris entre 0,6 et 1,2 cm$^3$/g,
— un mode de distribution des rayons de pore (c'est-à-dire le maximum de la courbe de distribution des rayons de pores) compris entre 30 et 70 · 10$^{-8}$ cm,
— une distribution du volume poreux telle que le catalyseur possède:
* au moins 60% de son volume poreux constitué par des pores de rayons compris entre 0 et 100 · 10$^{-8}$ cm,
* au plus 30% de son volume poreux constitué par des pores de rayons compris entre 100 et 600 · 10$^{-8}$ cm,
* au plus 10% de son volume poreux constitué par des pores de rayons supérieurs à 600 · 10$^{-8}$ cm;
et en ce que le spectre obtenu en étudiant ledit catalyseur par microsonde RAMAN est constitué par des raies ayant, pour les fréquences comprises entre 900 et 1020 cm$^{-1}$, la distribution suivante:
* 40% au plus ont une fréquence comprise entre 900 et 930 cm$^{-1}$,
* 30% au moins ont une fréquence comprise entre 930 et 955 cm$^{-1}$,
* 40% au plus ont une fréquence comprise entre 955 et 1020 cm$^{-1}$.

**Patentanspruch**

Verfahren zum gleichzeitigen Hydroentmetallisieren und Umwandeln einer Kohlenwasserstoffcharge, wobei die Charge mit Wasserstoff in Gegenwart eines Katalysators, welcher
einen Träger aus Tonerde, gegebenenfalls mit einem Gehalt von höchstens 10 Gew.-% an Kieselerde,
0,5 bis 20 Gew.-%, vorzugsweise 5 bis 10 Gew.-%, metallisches oder gebundenes Molybdän und
0,5 bis 10 Gew.-%, vorzugsweise 2,5 bis 8 Gew.-%, metallisches oder gebundenes Nickel
aufweist, bei einer Temperatur zwischen 300 und 450°C, unter einem Druck zwischen 25 und 250 bar und mit einem Wasserstoff/Kohlenwasserstoffe-Volumenverhältnis zwischen 50 und 300 Normliter/Liter sowie einer Volumengeschwindigkeit der Charge zwischen 0,1 und 5 v/v/h (auf den flüssigen Zustand bezogenes Volumen der Charge, welches über eine Katalysatorvolumeneinheit in einer Stunde hinwegströmt) umgesetzt wird, dadurch gekennzeichnet, daß der Katalysator die folgenden physikalischen Eigenschaften aufweist:
eine spezifische Oberfläche zwischen 100 und 350 m$^2$/g, vorzugsweise zwischen 140 und 300 m$^2$/g,
ein Porenvolumen zwischen 0,5 und 2 cm$^3$/g, vorzugsweise zwischen 0,6 und 1,2 cm$^3$/g,
eine Porenradiusverteilung, deren Kurve ihr Maximum zwischen 30 und 70 · 10$^{-8}$ cm hat, und
eine Porenvolumenverteilung, so daß mindestens 60% des Porenvolumens von Poren mit einem Radius zwischen 0 und 100 · 10$^{-8}$ cm, höchstens 30% des Porenvolumens von Poren mit einem Radius zwischen 100 und 600 · 10$^{-8}$ cm und höchstens 10% des Porenvolumens von Poren mit einem Radius größer als 600 · 10$^{-8}$ cm gebildet sind,
und daß das mittels einer RAMAN-Mikrosonde erhaltene Spektrum des Katalysators aus Linien besteht, welche im Frequenzbereich zwischen 900 und 1020 cm$^{-1}$ folgendermaßen verteilt sind:
höchstens 40% haben eine Frequenz zwischen 900 und 930 cm$^{-1}$,
mindestens 30% haben eine Frequenz zwischen 930 und 955 cm$^{-1}$ und
höchstens 40% haben eine Frequenz zwischen 955 und 1020 cm$^{-1}$.

**Claim**

A process for the hydrodemetallisation and simultaneous conversion of a hydrocarbon charge, said process comprising causing said charge to react with hydrogen in the presence of a catalyst composed of:
— an alumina support which can contain at most 10% of silica;

12

— from 0.5 to 20% and, preferably, 5 to 10% by weight of molybdenum as the metal or in a combined state,

— from 0.5 to 10% and, preferably, 2.5 to 8% by weight of nickel as the metal or in a combined state, at a temperature of between 300 and 450°C at a pressure of between 25 and 250 bar, with a hydrogen/hydrocarbon volume ratio of between 50 and 3000 normal litres and with a hourly spatial velocity of the charge, measured in the liquid state, of between 0.1 and 5 v/v/h (volume of liquid passing in one hour over a unit volume of catalyst),

said process being characterised in that the catalyst has the following physical characteristics:

— a specific surface of between 100 and 350 $m^2/g$ and, preferably, between 140 and 300 $m^2/g$,

— a pore volume of between 0.5 and 2 $cm^3/g$ and, preferably, between 0.6 and 1.2 $cm^3/g$,

— a mode of pore radius distribution (i.e. the maximum of the pore radius distribution curve) of between 30 and $70 \cdot 10^{-8}$ cm,

— a pore volume distribution such that the catalyst has:

* at least 60% of its pore volume comprising pores having radii of between 0 and $100 \cdot 10^{-8}$ cm,

* at most 30% of its pore volume comprising pores having radii comprised between 100 and $600 \cdot 10^{-8}$ cm,

* at most 10% of its pore volume comprising pores having radii greater than $600 \cdot 10^{-8}$ cm;

and in that the spectrum obtained when examining said catalyst by RAMAN microprobe comprises lines having, for frequencies of between 900 and 1020 $cm^{-1}$, the following distribution:

* 40% at most have a frequency of between 900 and 930 $cm^{-1}$,

* 30% at least have a frequency of between 930 and 955 $cm^{-1}$,

* 40% at most have a frequency of between 955 and 1020 $cm^{-1}$.

FIG.1

960

FIG.2

980

Δν cm⁻¹

900 1000

900 1000

Δν cm⁻¹

EP 0 246 159 B1

FIG.3